# EUROPEAN PATENT SPECIFICATION

(11) **EP 2 532 157 B1**
(45) Date of publication and mention of the grant of the patent: **28.11.2018**
(21) Application number: 10844977.8
(22) Date of filing: 04.02.2010
(51) Int. Cl.: H04N 7/173, G06F 17/30

(54) **METHOD FOR CONTENT FOLDING**
VERFAHREN ZUR KOMPRIMIERUNG VON INHALTEN
PROCÉDÉ DE PLIAGE DE CONTENU

(43) Date of publication of application: 12.12.2012
(73) Proprietor: Telefonaktiebolaget LM Ericsson (publ), 164 83 Stockholm (SE)
(72) Inventor: ZHAO, Leon, 510665 Guangzhou (CN)
(74) Representative: Brann AB
(86) International application number: PCT/CN2010/000151
(87) International publication number: WO 2011/094892

(56) References cited:
- WO-A1-2007/091510
- CN-A- 101 587 490
- US-A1- 2004 230 905
- US-A1- 2007 073 650

## Description

### Technical Field

The present invention relates to content folding of a web page to enable rendering of the web page on a resource-constrained device, and more particularly to interrelated methods, gateway and device for folding, unfolding and rendering of a web page with reduced layout attributes.

### Background

Content delivered over networks can be feature rich when rendered on the browser of a client, largely due to the rich capabilities built into complex markup languages, such as eXtensible Hypertext Markup Language (XHTML) and Cascading Style Sheets (CSS). XHTML, which is HTML re-cast in XML syntax, is specifically designed for Internet device displays.

CSS is a commonly supported styling language that gives more control over how web pages are displayed. With CSS, style sheets can be created, that define how different elements should appear, such as headers and links. These style sheets can then be applied to any web page. Both XHTML and CSS are described at length in their respective governing specifications provided by the World Wide Web Consortium (W3C). A common computing device, such as a personal computer (PC), executes a browser application to render content that is expressed as CSS-styled XHTML.

While a typical PC has sufficient resources to readily render XHTML+CSS using its browser, a communication device having considerably less memory, processor capacity and/or screen size, and which may be connected over a slow radio link, can experience severe performance degradation in processing and rendering such content.

The Document Object Model (DOM) is a cross-platform and language-independent convention. It defines the logical structure of documents and the way a document is accessed and manipulated. Aspects of the DOM, such as its elements, may be addressed and manipulated within the syntax of the markup language in use. The DOM presents an HTML document as structure - a node tree. The nodes in the node tree have a hierarchical relationship to each other. The top node is called the root. Every node, except the root, has exactly one parent node but all nodes including the root can have any number of children. A leaf is a node with no children. DOM is suited for applications where the document must be accessed repeatedly or out of sequence order. A web browser is not obliged to use DOM in order to render an HTML document. The process of transforming a DOM tree into a markup language is called serialization. One important property of a DOM is *structural isomorphism:* if two different serializers are used to create a representation of the same document, they will create the same DOM object. Consequently, an entity of content on a web page can be unambiguously represented by either of two forms, the DOM object or the HTML document. Therefore, it is customary to use the terminology of the DOM to indicate or define also elements and structure of the document itself.

A web gateway is a system providing HTTP Proxy Service to improve the user experience of Internet browsing on a resource-constrained device such as a mobile phone. It maintains a device repository with properties of the resource-constrained device, and uses these properties to restructure large and complex web pages and images to enable rendering by the browser on the device.

The OpenSurf component in Ericsson Drutt Mobile Service Delivery Platform is designed to provide content adaptation features in the web gateway.

Currently mobile operators deploy HTTP Proxy Service in the web gateway and the end-user can use any XHTML-MP compatible browser, embedded or 3rd party software, on a device to surf the Internet. It then operates in a Browser-Server mode.

Some software/service venders such as Opera (http://www.opera.com/mini) and UCWEB (http://www.uc.cn/English/index.shtml) provide Client-Server mode solutions for web content adaptation. Specified client browser software must then be installed on the device.

Since mobile devices usually have a limited screen width compared to a full-fledged PC and the content is delivered as a XHTML-MP page, the layout attributes in CSS are removed. Only XHTML-MP supported CSS attributes remains in the restructured page. Normally the navigation areas of web sites are composed of multiple "div" and "ul"/"li" elements and use CSS to manage the layout. After transforming, the layout CSS attributes are removed and these previously horizontally oriented navigation links will be shown as a long vertical list. While the device screen is limited in width, it is also decidedly limited in height. Therefore, reading the page will require extensive scrolling, and orientation is harder in this new format than in the original format. The used experience is thus inadequate.
US 2004/230905 A1 is mentioned as prior art. It relates to an information processing apparatus, a server, a method and a program for creating a digest of a document, such as a Web page, the layout of which is predetermined by a creator. Display elements belonging to respective regions of a document are selected based on display priorities of the display elements, which are obtained by digest screen display priority information creating means. Further, selected display elements are decided as display content of a digest screen under a condition where a total display area does not exceed a required display area. A merging relationship among the regions is set based on layout information for the regions, created by digest screen region layout information creating means. Display content deciding means decides the display content of a detail screen based on the merging relationship among the regions, and creates a digest of the detail screen based on control information created by control information creating means. Moreover, digest screen display content changing means changes the display content of the digest screen in response to an operation of a user.

### Summary

According to the invention there are provided a method, system, computer program and computer program product according to claims 1, 11, 14 and 15. Preferable features of the invention are defined in the dependent claims.

It is the object to obviate at least some of the above disadvantages and provide improved methods, apparatuses and computer media products avoiding the above mentioned drawbacks.

A first example of the invention is an interrelated method in a web gateway for content folding of a web page to provide web content adaptation features in the web gateway. The web page is represented by a markup language document or its isomorphic DOM tree, enabling rendering of the web page on a resource-constrained device. The comprising the steps of receiving an HTTP request for the web page, from the resource-constrained device; obtaining the web page from a remote web server; identifying a lowest-level folding candidate element of every web page branch, wherein the lowest-level folding candidate element is an element which is searched from a root node till each element of the isomorphic DOM tree for the web page such that none of the element's children is a folding element which is determined recursively based on determining a type-set of the element selected from at least one of DIV, UL and OL element types; determining whether an average hyperlink text length of the element's children is below a first predefined value; and determining whether an average text length of the element's children is below a second predefined value. The method further comprises attributing structure attributes to each folding candidate element derived from its children elements, indicative of the structure and amount of content comprised within the folding candidate element, wherein the structure attributes is defined to be at least one of total hyperlink length, hyperlink count, total text length, text count and LI count found in children elements; replacing at least one group of original folding candidate elements that are consecutive siblings of each other, with a replacing folding candidate element that comprises the structure attributes wherein the consecutive siblings are the nodes of the isomorphic DOM tree having elements of similar structure attributes; assessing the structure attributes of each folding candidate element not being replaced with the replacing folding candidate element, against a predetermined criterion for folding elements, wherein the predetermined criterion corresponds to one or more of the total hyperlink length, the hyperlink count, the total text length, the text count, the average hyperlink text length, the average text length, and the LI count, and if the criteria are met; marking that element with a unique folding element ID enabling retrieval of the folding element and adding a bookmark for locating a particular position in the web-page and for easier rendering of the relevant section of the web page; finishing the marked web page by replacing each folding element with a new DIV node comprising a hyperlink generated based on at least the folding element's ID, the bookmark and URL associated with the HTTP request, thus creating a clickable placeholder wherein the finishing the marked web page further comprises; customizing the web page for the device by chunking it into sub-pages of equal data size adapted for the resource-constrained device's limited memory and browser resources; allocating a page number to each sub-page; sending a pagination navigation bar comprising the allocated page numbers of the unfolded web page to the resource-constrained device; and receiving a page number from the resource-constrained device; and preparing to send the corresponding sub-page as the customized web page; and the method further comprises sending the customized web page to the resource-constrained device, wherein the clickable placeholder enables unfolding of the folded web page when at the resource-constrained device side, a click operation is performed on the clickable placeholder.

The HTTP request is received over a first network. The web page obtained may be in the form of a markup language document, such as an XHTML document comprising extensive layout attributes. After deserializing the web page into a document in a markup language with reduced support for layout attributes, such as XHTML-MP it has principally vertical orientation.

A folding function in the web gateway is identifying the lowest-level folding candidate element of every web page branch. The folding function is then attributing structure attributes to each folding candidate element found during the identification step. These steps enable structure recognition and distinction between content suitable for content folding and content that is not suitable for content folding. Then the folding function in the gateway is replacing each group of consecutive folding candidate element siblings with a replacing folding candidate element, such as e.g. a DIV element, that comprises structure attributes, attributed after the same principles as in the above step. This replacing step recognizes structures that can be compressed or merged together without necessarily also being folded.

The folding function of the gateway is then assessing the structure attributes of each remaining folding candidate element against predetermined criteria for folding elements. This step is distinguishing the information inherent in the content from features that may become a liability when given a principally vertical orientation. The elements that meet the criteria are then being marked with a unique folding element ID enabling retrieval of the folding element, should the end user wish to unfold a folded element. Lastly, the folding function of the web gateway is finishing the marked web page by replacing each folding element with a new DIV node comprising a hyperlink generated based on at least the folding element's ID, URL and a bookmark, thus creating a clickable placeholder; and the web gateway is then sending the folded web page to the device.

The identifying step may comprise determining that none of the element's children is a folding candidate element; an element is of a predefined type-set; the average hyperlink text length of the element's children is below a first predefined value; and the average text length of the element's children is below a second predefined value.

The predefined type-set may comprise the DIV, UL and OL element types. The replacing step may further comprise appending each element of the replaced sibling group as a child to the replacing folding candidate element; and attributing structure attributes to the folding candidate element derived from the folding candidate element's children elements, indicative of the amount of content, such as e.g. attributing structure attributes indicating the length sum of all hyperlink text elements of the children; hyperlink count of the children; length sum of all text elements of the children; text count of the children; and amount of LI elements found in children elements.

The text element length may be calculated as word count or alternatively Unicode character count. The below detailed description describes a code analysis procedure for determining which alternative is appropriate.

The first criterion is met when hyperlink count is equal to or above a predetermined value. The second criterion is met when the amount of LI elements in children elements equals zero and the predetermined value is a third predetermined value. The second criterion is met when the amount of LI elements in children elements exceeds zero; and the predetermined value is a fourth predetermined value.

A second example of the invention is an interrelated method in a web gateway for unfolding of folded content of a web page to provide web content adaption features in the web gateway. The web page is represented by a markup language document or an isomorphic DOM tree, enabling rendering of the web page on a resource-constrained device. The method comprises the steps of receiving an HTTP request from the resource-constrained device; searching for an unfolding indicator in the request URL; and if found: extracting a folding ID and a page URL from the request URL, wherein the folding ID and the page URL corresponds to an element to be unfolded; finishing the unfolded web page by replacing each folding element with a new DIV node comprising a hyperlink generated based on at least the folding element's ID, a bookmark, and URL; and sending the unfolded web page to the device, wherein, in an event, at the device side a click operation is performed on the hyperlink, the unfolded web page is scrolled to location where the bookmark is located.

The web gateway is receiving an HTTP request from the device, and is then searching for an unfolding indicator in the request URL. If found, the web gateway is extracting a folding ID and a page URL from the request URL. The element to which the URL points is then being unmarked, i.e. the structure attributes are removed.

Lastly, the folding function of the web gateway is finishing the unfolded web page by replacing each folding element with a new DIV node comprising a hyperlink generated based on at least the folding element's ID, URL and a bookmark; and sending the unfolded web page to the device.

According to the first or second example of the invention, the finishing step may further comprise paginating and customizing the web page for the device by chunking it into sub-pages of equal data size, adapted to the device memory and processing capabilities; allocating a page number to each sub-page; sending a pagination navigation bar comprising the allocated page numbers of the web page to the device; receiving a page number from the device; preparing to send the corresponding sub-page as the customized web page. The latter may include appending a bookmark to the URL thereby enabling automatic location of the element on the device screen once it is unfolded.

A third interrelated example is an interrelated method in a resource constrained device. This method performs unfolding and rendering of folded content in a web page coded in a markup language with reduced support for layout attributes, such as XHTML-MP, and which has a principally vertical orientation. The web page is received from a web gateway, and the method comprises sending a HTTP request to a remote web server for a web page via a web gateway. It is not necessary to take into account the kind of markup language the requested web page is written in, and whether it is renderable on the device screen. The device is then receiving the web page in a folded format optimized for rendering on a limited screen of the resource constrained device; i.e. a web page upon which the first or second aspect of the invention has been applied.

The device is then rendering the web page and automatically scrolling the content so that the location of a bookmark being appended to the web page is visible on the screen of the resource constrained device. Upon the end-user clicking a clickable placeholder the third aspect further comprises sending an unfolding request to the web gateway comprising a URL and a folding ID indicating an element associated with the clickable placeholder; and receiving from the web gateway an unfolded web page comprising the unfolded element. The received web page has been unfolded according to the second aspect of the invention. The method may comprise the further steps receiving a pagination navigation bar comprising page numbers allocated to sub-pages of the unfolded web page to the device. The sub-pages are adapted for the device's limited memory and browser resources. The device is rendering the pagination navigation bar on the screen and upon an end-user selecting a page, the device is sending a request comprising a page number for a corresponding sub-page to the web gateway.

A fourth example of the invention is a resource-constrained device comprising a memory, a radio transceiver enabling connectivity to a web gateway over a first network; a processing unit, a user interface comprising a screen. The device is adapted and configured to send a HTTP request to a remote web server via the web gateway, for a web page regardless of format, to receive from the web gateway a web page in a folded format optimized for rendering on a limited screen of the resource constrained device with limited memory; and to automatically scroll the content so that the location of a bookmark is visible on the screen of the resource constrained device. The folded format is a result of processing according to a first or a second aspect of the invention.

The device is further adapted and configured to send an unfolding request to the web gateway comprising a URL and a folding ID indicating an element that should be unfolded; to receive from the web gateway the unfolded web page comprising the unfolded element; to receive a pagination navigation bar comprising page numbers allocated to sub-pages of the unfolded web page to the resource constrained device, the sub-pages being adapted to the device memory; to render the pagination navigation bar on the resource constrained device; and to send a request comprising a page number for a corresponding sub-page to the web gateway.

A fifth example of the invention is a web gateway for content folding of a web page to provide web content adaptation features and comprising a first network interface and a transceiver providing connectivity towards a resource constrained device in a first network, which is a radio network, a second network interface providing connectivity towards a second network, which is the Interent, a memory and a processing unit. The processing unit and the memory together provide a folding function and a folding cache. The web gateway is adapted an configured to receive an HTTP request from the resource constrained device; to obtain the web page from a remote web server; to identify a lowest-level folding candidate element of every web page branch; wherein the lowest-level folding candidate element is an element which is searched from a root node till each element of a isomorphic DOM tree for the web page such that none of the element's children is a folding element which is recursively determined recursively based on determining a type-set of the element selected from at least one of DIV, UL and OL element types; determining whether an average hyperlink text length of the element's children is below a first predefined value; and determining whether an average text length of the element's children is below a second predefined value. It is also adapted and configured to attribute structure attributes to each folding candidate element derived from its children elements, indicative of the structure and amount of content comprised within the folding candidate element, wherein the structure attributes is defined to be at least one of total hyperlink length, hyperlink count, total text length, text count and LI count found in children elements; to replace at least one group of original folding candidate elements that are consecutive siblings of each other, with a replacing folding candidate element that comprises the structure attributes, wherein the consecutive siblings are the nodes of the isomorphic DOM tree having elements of similar structure attributes; to assess the structure attributes of each folding candidate element not being replaced with the replacing folding candidate element, against a predetermined criterion for folding elements, wherein the predetermined criterion corresponds to one or more of the total hyperlink length, the hyperlink count, the total text length, the text count, the average hyperlink text length, the average text length, and the LI count; and if the criteria are met; to mark that element with a unique folding element ID enabling retrieval of the folding element, and a bookmark for locating a particular position in the web-page and for easier rendering of the relevant section of the web page; and to finish the marked web page by replacing each folding element with a new DIV node comprising a hyperlink generated based on at least the folding element's ID, URL associated with the http request and a bookmark, thus creating a clickable placeholder;

The web gateway is further be adapted and configured to customize the web page for the resource constrained device by chunking it into sub-pages adapted for the resource constrained device's limited memory and browser resources; to allocate a page number to each sub-page; to send a pagination navigation bar comprising the allocated page numbers of the web page to the resource constrained device; to receive a page number from the resource constrained device; and to send the customized web page to the device, wherein the clickable placeholder enables unfolding of the folded web page when at the resource constrained device side, a click operation is performed on the clickable placeholder. The web gateway may further be adapted to receive an HTTP request from the device; to search for an unfolding indicator in the request URL; and if found to extract a folding ID and a page URL from the request URL; to remove the marking of the folding element to which the page URL points; finish the unfolded web page by replacing each folding element with a new DIV node comprising a hyperlink generated based on at least the folding element's ID, URL and a bookmark; and to send the unfolded web page to the device.

A sixth example of the invention is a computer program comprising code means for performing the steps of any one of the aspects 1, 2 or 3 when the program is run on a computer.

A seventh example of the invention is a computer program product comprising program code means stored on a computer readable medium for performing the methods of aspects 1, 2 or 3 when said product is run on a computer.

### Brief Description of the Drawings

Figure 1 illustrates a system within which a web gateway and a resource- constrained device are interacting.
Figure 2 a and b illustrates schematically a device and a web gateway respectively, according to embodiments of the invention.
Figure 3 is a flow chart illustrating two interrelated methods according to embodiments of the invention.
The methods are performed in a web gateway as depicted in figure 2 b.
Figure 4 is a flow chart illustrating an interrelated method in a resource- constrained according to embodiments of the invention.

### Detailed Description

It is an objective to provide methods, gateway and device for folding of content in a vertically elongated web page, so that it is suitable for rendering in a resource- constrained computing device. A related objective is to reduce the amount of data the device has to send, receive, process, store and render, due to its limited bandwidth, processing and memory capabilities, and user interface, particularly the screen and screen controls.

If is a further objective to preserve the information inherent in the content, while defusing features that may become a liability when given a principally vertical orientation. It is also an objective to achieve the above objectives without offsetting the user experience by procedures that cannot accurately distinguish inherent information from void features. Another important objective is to retain certain dynamics of the original web page to allow the content to remain dynamic in nature.

The below suggested methods, web gateway and device for content folding according to embodiments of the invention, optimizes the use and improves the user experience of a device with constrained resources, which may also receive the content over a relatively slow connection, such as a radio link.

Embodiments of the invention, methods, web gateway and device, are a part of the content adaptation features on the web gateway based on the Mobile Service Delivery Platform OpenSurf. It can be used to support content folding browsing in any device with XHTML-MP rendering capability. It is also a browser independent implementation.

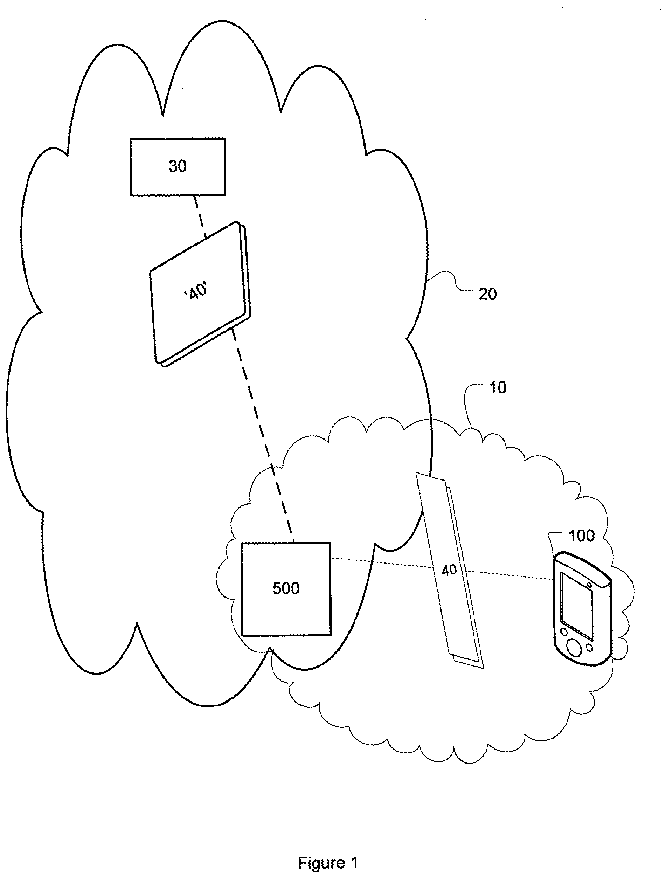

A system in which embodiments of the invention may occur will now be described in relation to figure 1. A resource-constrained device 100 may operate in a radio network 10. The device 100 may be a portable radio communication device, and the term device includes but is not limited to all equipment such as mobile telephones, pagers, communicators, electronic organizers, smart phones or the like.

In order to access a web page '40' from a remote web server 30 connected to the Internet 20, the device 100 may connect via a web gateway 500.

When an end user selects a link, the device 100 sends a URL to the web gateway 500, which in turn uses it to request the corresponding web page '40' from the website to which the URL points. Upon reception, the gateway 500 transforms the original web page '40' written in a markup language such as e.g. HTML or XHTML into a web page 40 written in a markup language with reduced support for layout attributes, such as e.g. XHTML-MP. Normally, the navigation areas of web sites are composed of multiple "div" and "ul"/"li" elements and use CSS to manage the layout. After transforming, these previously horizontally oriented navigation links will be shown as a long vertical list. While the device screen is limited in width, it is also decidedly limited in height. Therefore, reading the web page 40 will require extensive scrolling. Furthermore, orientation is harder in this new format than in the original format. The user experience is thus inadequate.

Various Internet web page structures may be used to compose a navigation bar or a hyperlinks list. Common structures for navigation bars are "div+ul+li" and "div+span". If these structures and patterns can be recognized with an adequately low error rate on discrimination, efficient content folding could be obtained. For example the "div+ul+li" structure may be used both to compose a navigation bar as well as news headlines, and while it is desirable to fold a navigation bar, the news headlines should remain unfolded and fully readable. The primary difference between a navigation bar and a set of news headlines is the length of link texts. Content folding should therefore be based on functions comprising link text length calculation and structure recognition.

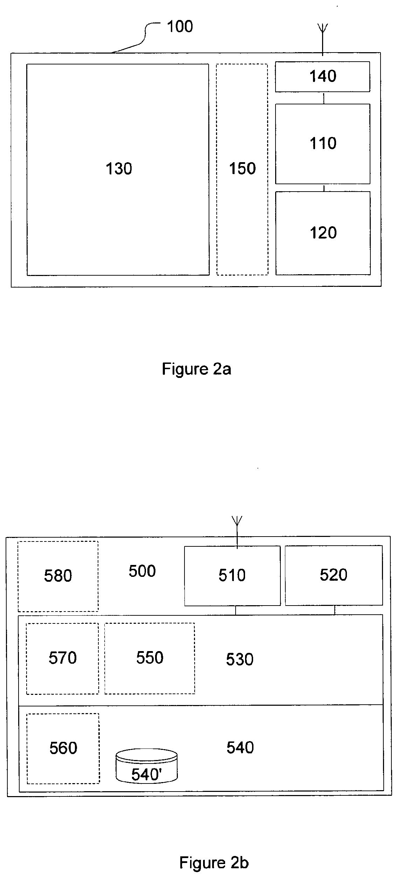

Figure 2 a displays a resource-constrained device 100. It comprises a processor 110 with limited capacity, a memory 120 with limited capacity, a transceiver 140 and a user interface 130. The user interface 130 comprises interfaces that allow the user to interact with the device 100, such as e.g. a key pad, a joy stick or a touch pad. The user interface 130 also comprises a screen with limited dimensions, upon which web pages can be rendered. A browser function 150 is also implemented.

Figure 2b displays a web gateway 500 comprising a first interface 510 towards a radio network 10 and a second interface 520 towards the Internet 20. The gateway 500 further comprises a processor unit 530 and a memory unit 540. Upon reception of a web page '40', the processor 530 is adapted to transform it to a web page 40 with reduced support for layout attributes. The corresponding markup language document 40 may we written in XHTML-MP. The processor 530 and memory 540 are further adapted and configured to provide a serializing function 550 so that the web page 40 may be interchangeably manipulated as a markup language document 40 and as an isomorphic DOM object 40. The processor 530 and memory 540 further enable a folding function 570 and a folding cache 560, with which the comprised elements of the web page 40 is manipulated either as elements of the document representation 40 or as isomorphic elements of the DOM representation 40.

A person skilled in the art will appreciate that editing of content elements may be achieved by manipulation of a document representation or by an equivalent manipulation of a DOM representation, with the same result. Throughout this patent application, aspects of the DOM, such as e.g. its "elements", may be non-discriminatingly referenced and described within the syntax of the markup language in use. Analogously, aspects of the markup language documents may be non-discriminatingly referenced and described within the syntax of the corresponding DOM aspect.

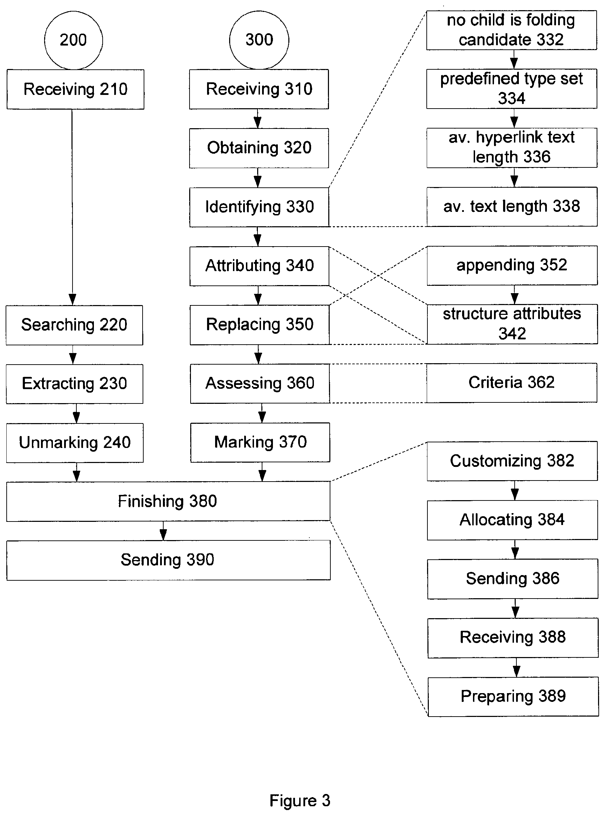

A first interrelated method according to an embodiment of the invention will now be described in relation to figure 3. It is a method 300 for content folding performed in a web gateway 500. The content upon which the method 300 is performed is a web page 40, which has been stripped of certain layout attributes. The method 300 is enabling rendering of the web page 40 on a resource-constrained device 100 and it comprises a receiving step 310 where the web gateway 500 is receiving an HTTP request for a web page '40' from the device 100. In an obtaining step 320, the web gateway 500 is obtaining the web page 40 from a remote web server 30.

An identifying step 330 is identifying the lowest-level folding candidate element of every web page 40 branch. This may be done by Depth First Search (DFS), i.e. starting at the root element and visiting as far as possible along each branch before backtracking, and then applying criteria tests 362.

In effect this means recursively determining in step 332 that none of the element's children is a folding candidate element. This is determined based on several criteria.

One criterion is determining in step 334 that an element is of a predefined element type-set. The predefined type set may comprise the DIV element type; it may comprise the UL element type; and it may comprise the OL element type.

Further criteria are determining in step 336 that the average hyperlink text length of the element's children is below a first predefined value; and determining in step 338 that the average text length of the element's children is below a second predefined value.

Average hyperlink text length may be calculated as total hyperlink length, i.e. length sum of all hyperlink text elements, divided by hyperlink count, i.e. the total number of hyperlinks. Average text length may be calculated as total text length, i.e. length sum of all text elements divided by text count, i.e. the total number of texts. Depending on the language in which the texts are written, text element length and hyperlink text element length is being defined differently. For Western languages, it may be defined as number of words. In languages such as Swedish, German or Finnish, where the use of solid compounds, i.e. words with more than one root morpheme, are frequent, these solid compounds may be counted as their number of root morphemes. The German word "verteidigungsminister" would then be counted as two - "verteidigung" and "minister".

Languages such as Chinese, Vietnamese, Japanese and Korean, henceforth referred to as Eastern languages, use writing systems based on logograms - each character represent a word or a morpheme. For pages written in such languages, Unicode character count may be used.

An attributing step 340 is attributing structure attributes 342 to each folding candidate element. The structure attributes are derived from each folding candidate's children elements, and they are indicative of the structure and amount of content comprised within the folding candidate element, including its children. This step may comprise attributing a structure attribute called "folding", the presence of which indicates that the element is a folding candidate. No argument is needed for the 'folding' attribute at this stage. Further structure attributes may be attributed to the candidate. A structure attribute 'flinkl' may be indicating the length sum of all hyperlink text elements of the children, another structure attribute 'flinks' may be indicating hyperlink count of the children. A third structure attribute 'ftextl' may be indicating the length sum of all text elements of the children. Further, text count of the children; and amount of LI elements found in children elements, may be indicated by structure attributes 'ftexts' and 'fulli' respectively.

'flinkl', 'flinks', 'ftextl', 'ftexts', and 'fulli' assume numerical arguments. An attributed folding element may look like the following example:
<div folding="" flinkl="10" flinks="5" ftextl="0" ftexts="0" fulli="1">...</div>

Once this primary structure inventory of the web page 40 is made in the web gateway 500, a replacing step 350, comprising replacing each group of consecutive folding candidate element siblings with a replacing folding candidate element that comprises structure attributes is being performed. To each replacing folding candidate element each element of the replaced sibling group is being appended in step 352 as a child. Attributing structure attributes in step 342 to the replacing folding candidate element derived from the folding candidate element's appended children elements is being made to preserve information about the original structure and amount of content. The structure attributes are indicative of the amount of content and are composed as described in the attributing step above. DFS may be used on the DOM object 40 with structure attributes stored on a stack, to find and merge foldable siblings.

The foldable element is wrapped in a context object which also comprises information on children who are sibling foldable elements, and counters for all children, foldable children as well as non-foldable children.

When a foldable element is found, its parent, i.e. the context object of the last foldable element in its ancestor nodes, is being retrieved from the top of the stack.

For each foldable element, the context is pushed into the stack and a recursive visitor is applied on its children.

When all children have been visited, the current element context is being retrieved from the stack in order to determine whether there are groups of consecutive folding candidate siblings. If so, the current element need only be marked with a 'folding' attribute and sum of each structure attribute. All folding and structure attributes on children should be removed. A first example structure:

```
                    <div folding="" flinks="0" flinkl="0" ftexts="0" ftextl="0">
              <div folding="" flinks="5" flinkl="10" ftexts="0" ftextl="0">...</div>
              <div folding="" flinks="10" flinkl="30" ftexts="0" ftextl="0">...</div>
              </div>
```

may be merged and transformed into:

```
                    <div folding="" flinks="15" flinkl="40" ftexts="0" ftextl="0">
              <div>...</div>
              <div>...</div>
              </div>
```

The following example shows two consecutive div elements and one single hyperlink element:

```
              <div folding="" flinks="5" flinkl="10" ftexts="0" ftextl="0">...</div>
              <div folding="" flinks="10" flinkl="30" ftexts="0" ftextl="0">...</div>
              <a href="target.html">The link text</a>
```

The siblings can be merged and a new div element is appended:

```
              <div folding="" flinks="15" flinkl="40" ftexts="0" ftextl="0">
              <div>...</div>
              <div>...</div>
              </div>
              <a href="target.html">The link text</a>
```

The assessing step 360 is assessing the structure attributes of each remaining folding candidate element, i.e. each folding element that has structure attributes, against predetermined criteria for folding elements. The structure attributes used to assess the children elements are presented above, i.e. Total hyperlink length, Hyperlink Count, Total text length, Text Count, Average hyperlink text length and Average text length, and LI Count.

A first criterion for folding is that the number of hyperlinks in an element should be equal to or above a predetermined value. A sub-criterion is that if the amount of LI elements in children elements equals zero ('fulli'==0), the predetermined value, 'Flow Links' should be used. 'Flow Links' may be 20 for optimum result. If the amount of LI elements in children elements exceeds zero ('fulli'>0), the predetermined value 'Li Links' should be used. 'Li Links' may be 7 for optimum result.

A second criterion is that the average link length of a foldable element is smaller or equal to a predetermined Average Link Length. For Eastern languages this value may be 5 and for Western languages it may be 3.

A third criterion is that the text length of all hyperlinks should be smaller or equal to a predetermined Maximum Link Length. For Eastern languages this value may be 10 and for Western languages it may be 5.

A fourth criterion is that all text lengths of text elements should be smaller than or equal to Maximum Text Length. This value may be 30.

As mentioned the calculation of text and link length is different from Eastern and Western languages. For the Average Link Length, Maximum Link Length and Maximum Text Length thresholds, there should be one for Eastern languages and other for Western languages.
The following algorithm is designed to recognize if Eastern (CJK) languages are used for a web page. Content-Type meta information in the page header is used. If the character set belongs to one of the CJK character set, this page should be using Eastern language thresholds. If Content-Type can not be found or if it uses UTF-8 or Unicode, the language can be found in the attribute of the html element. According to the XHTML spec, the "xml:lang" and "lang" attributes in an html element can be used to determine the language of a page.
If these attributes cannot be found, the first three text contents of the page are used to determine the language. If most or all of them are in an Eastern language the web page is deemed to be using an Eastern language.

If the criteria are met, a marking step 370 is being performed.

The marking step 370 is marking each element for which the criteria are met with a unique folding ID enabling retrieval of the folding element. The folding ID may be added as an argument to the "folding" attribute described above. A bookmark may also be added, which enables easier rendering of the relevant section of the web page 40 on the limited screen of the device 100.

The finishing step 380 is finishing the marked web page 40 by replacing each folding element with a new DIV node comprising a hyperlink generated based on at least the folding element's ID, and URL, thus creating a clickable placeholder. The placeholder requires very little data space, which makes it ideal for devices that receive content over a slow connection such as a radio link, and for devices that have limited memory and processing capabilities. The folding ID may be extracted from the "folding" attribute of the element.
The finishing step (380) may further comprise appending a bookmark to the URL thereby enabling automatic location of the element on the device screen once it is unfolded. An unfolding link is generated, e.g.
requestPath+?e=[foldingId]&*=e[hashValue] &[other request url query parameters]#dOpSf[foldingld]
The hashValue is generated from the indicator tag "e", a pre-configured password and the unfolding URL which is used to unfold the element with the respective folding ID. The last part of the unfolding URL is the bookmark for locating the unfolded element. A content digest of the replaced folding element may also be added to the hyperlink.

The DOM object 40 processed by the above method steps will be serialized and stored in the folding cache 560. The Least Recently Used (LRU) algorithm may be used for this cache. The MD5 hash digests of the page URL and the current user's MSISDN may be used as cache key. The cached DOM object 40 is used when the device 100 requests unfolding of a folded element to get full content.

Regardless if the element is eventually folded, all attributes added during the above steps are removed. They are not standard XHTML tag attributes and should not reach the device 100. The structure of the element to be folded, and its children, will look like this:

```
              <div folding="f1">
              <a name="dOpSff1"></a>
              <ul>...</ul>
              <ul>...</ul>
              </div> 
```

with folding ID & bookmark in italics.

Currently in HTML and XHTML, adding a bookmark is the most straightforward option for locating a particular position in a page. This is desired for increased user experience. Alternatively, pagination could be made based on the position of unfolded content, so that the unfolded content constitutes the start of a sub-page.

Lastly, the web gateway 500 is sending the folded web page 40 to the device 100.

The Mobile Service Delivery Platform has a global database to store device properties. The web gateway 500 keeps a device repository with information about the device 100, and is paginating content based on the maximum page size that can be processed by the memory and the browser 150 on the device 100. If a large page exceeding this size is sent to the device, the device may lose the page data, it may be unable to render the whole page content or it may simply inform the end user in an error message that "the page is too large". MSDP OpenSurf already provides pagination functionality. However, since content folding will remove the foldable elements from the web page, the total size of the web page is changed. Therefore pagination must be integrated with content folding and content unfolding methods in order to achieve the intended objective.

The finishing step may therefore comprise the following steps. A customizing step 382 that is customizing the web page 40 for the device 100 by chunking it into sub-pages of that do not exceed the maximum data size that can be rendered. This may be done by traversing the DOM tree 40 and calculating the size of each element and adding to the size of previously traversed elements. Once an amount of elements adapted for the device memory and processing capabilities has been traversed, these traversed elements are being divided into a sub-page. Then traversing continues, so that multiple sub-pages, optimized for that particular device, are being created.

After allocating, in step 384, a page number to each sub-page, a pagination navigation bar is being created and merged with an initial sub-page chosen by default, In a sending step 386 the pagination navigation bar, along with the initial sub-page, is sent to and rendered 640 by the device. The pagination navigation bar is comprising the allocated page numbers of the web page. This enables the end-user to select a page of choice by clicking the pagination navigation bar. The web gateway 500 is subsequently receiving 388 a page number from the device 100.

Upon reception of the page number from the device 100, the web gateway 500 is preparing 389 to send the corresponding sub-page merged with the pagination navigation bar as the customized web page 40 by serializing and returning the chosen sub-page to the device 100 for further rendering on the screen.

An interrelated method 200 will now be described in relation to figure 3. It is a method in a web gateway 500 for unfolding of folded content of a web page 40 that has been folded according to the interrelated folding method 300. The web page 40 can be represented by a markup language document 40 or an isomorphic DOM tree 40. The method 200 is enabling rendering of folded elements of the web page 40 on a resource-constrained device 100.

Worth noting is that this unfolding method 200 is not the exact transverse of the folding method 300. A previously folded web page which is subsequently unfolded according to the method 200 may very well still be in a folded format. The method 200 unfolds one of potentially many folded elements of a web page. Notwithstanding, the method 200 enables full retrieval of all items of folded content of the web page. The interrelated method comprises the following steps.

Receiving in a receiving step 210 an HTTP request comprising a request URL from the device 100. In a searching step 220, the web gateway 500 will then be searching for an unfolding indicator "e" in the request URL. The URL may have the following syntax:
requestPath+?e=[foldingId]&*=e[hashValue] &[other query parameters in request url]#dOpSf[foldingId] "e=[foldingId]&*=e[hashValue]" is the indicator.

If the unfolding indicator "e" is found, an extracting step 230 is extracting a folding ID and a page URL from the request URL. The web gateway 500 may be verifying a hashValue before extracting the indicator "e=[foldingId]&*=e", indicating that an element with a structure attribute "folding=foldingId" should be unfolded.

An unmarking step 240 is unmarking the folding element to which the page URL points. The structure attributes in the unfolded element is being removed in order to disable placeholder transformation, and to enable unfolding.

Content folding is then performed on all foldable elements that become visible due to the unfolding. This is being done according to the content folding method 300 described above.

A finishing step 380 is finishing the unfolded web page 40 by replacing each folding element with a new DIV node comprising a hyperlink generated based on at least the folding element's ID, and URL; and a sending step 390 is sending the unfolded web page 40 to the device 100.

Prior to sending a folded or unfolded web page to the device 100, it is prepared and cached according to the URL and the device 100's MSISDN. If the web gateway 500 is deployed behind the WAP GW, the MSISDN can be sent in the HTTP Request as a header. If the web gateway 500 is directly connected with the GGSN, the MSISDN can be fetched by using request IP address via a Radius Server, which is used for authentication and authorization when a device 100 connects to the GPRS or 3G network. However, since the web gateway 500 is a proxy between the device 100 and the Internet, it may also add the MSISDN to the HTTP request header.

Below follows an example of an unfolding link. The placeholder for the folded content is
<div><a href="?e=f1&*=ezNE#dOpSff1">[+]</a><span>Nyheter Sport Kultur & Nöje </span></div>

The unfolding link is ?e=f1&*=ezNE#dOpSff1. When the end-user clicks "[+]", a request with the following URL is sent to WEBGW:
http://www.gp.se/?e=f1&*=ezNE#dOpSff1, where "e=f1" signals the folding ID and *=ezNE is signaling that "e=f1&*=ezNE" is an indicator added by OpenSurf. 'zNE' is the hash value calculated from the URL '#dOpSff1' is the bookmark that is used for locating the position of the unfolded content. When the device browser 150 receives the content, it will automatically scroll the page to where the bookmark: <a name="dOpSf[foldingId]"></a> is located. Below follows an example of unfolded content:
<div id="topMenuWrapper"><a name="dOpSff1"></a>
<ul id="level1" class="row"><li id="navLevel1_item1" class="item start_department selected"><strong><a href="/nyheter"><span>Nyheter</span></a></strong></li><li id="navLevel1_item2" class="item sport_department"><a
href="/sport"><span>Sport</span></a></li><li id="navLevell_item3" class="item culture_department"><a href="/kulturnoje"><span>Kultur & Nöje</span></a></li>

The finishing step may include the following steps.

A customizing step 382 is customizing the web page 40 for the device 100 by chunking it into sub-pages of a magnitude that do not exceed the maximum data size that can be rendered by the device in terms comprising memory, processor and browser capacity. How this may be done is described above.

After allocating, in step 384, a page number to each sub-page, a pagination navigation bar is being created and merged with an initial sub-page chosen by default, In a sending step 386 the pagination navigation bar, along with the initial sub-page, is sent to and rendered 640 by the device. The pagination navigation bar is comprising the allocated page numbers of the web page. This enables the end-user to select a page of choice by clicking the pagination navigation bar. The web gateway 500 is subsequently receiving 388 a page number from the device 100.

Upon reception of the page number from the device 100, the web gateway 500 is preparing 389 to send the corresponding pub-page merged with the pagination navigation bar as the customized web page 40 by serializing and returning the chosen sub-page to the device 100 for further rendering on the screen. Pagination during unfolding of folded content elements must take into account that the current page number may be changing with the document size changing. It is important to enable the device 100 to scroll the page to the unfolded area. A bookmark enabling this feature may therefore be added for location during the preparing step 389. The bookmark is then sent with the sub-page to the device 100.

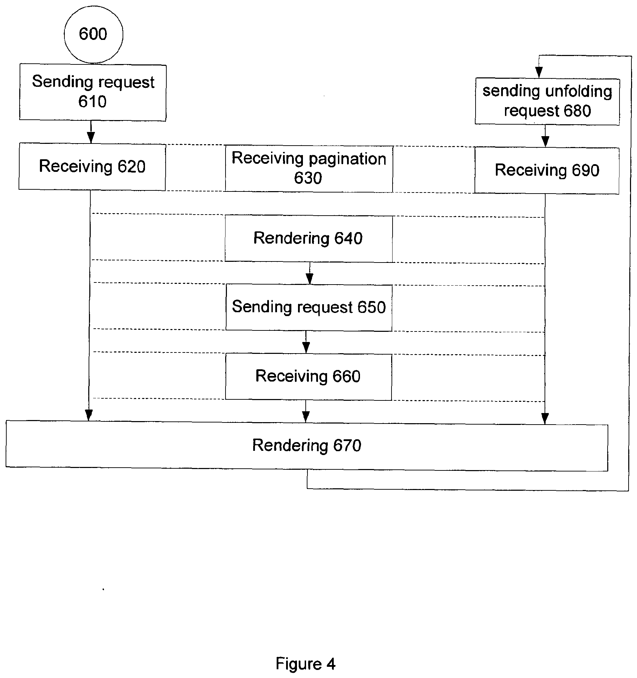

A third interrelated method 600 in a resource-constrained device 100 for unfolding and rendering of folded content in a web page 40 received from a web gateway 500 will now be described in relation to figure 4. The third interrelated method 600 comprises the following steps.

A sending step 610 is sending a HTTP request for a web page '40' to a remote web server 30 via a web gateway 500; In is not necessary to take into account the kind of markup language the requested web page is written in, and whether it is renderable on the device screen.

A receiving step 620 is receiving a web page 40, which has a folded format optimized for rendering on a limited screen, and comprising a bookmark. The web page 40 has been folded in the web gateway 500 according to the first interrelated method 300 described above.

A rendering step 670 is rendering the web page 40 and scrolling the content so that the location of the bookmark is visible on the screen.

Upon the end-user selecting an unfoldable link, the device 100 is performing the following steps.

A sending step 680 is sending an unfolding request to the web gateway 500 comprising a URL and a folding ID indicating an element that should be unfolded. An unfolding indicator is also comprised. This step is enabling the web gateway 500 to identify that the request is an unfolding request, and enabling identification of the requested element to be unfolded. The URL may have the following syntax: requestPath+?e=[foldingId]&*=e[hashValue] &[other query parameters in request url]#dOpSf[foldingld] "e=[foldingId]&*=e[hashValue]" is the indicator.

In a receiving step 690 the device 100 is then receiving from the web gateway 500 an unfolded web page 40 comprising the unfolded element, which is subsequently rendered in a rendering step 670.

The method may comprise the following steps.
A receiving pagination step 630 is receiving a pagination navigation bar comprising page numbers allocated to sub-pages of the unfolded web pate 40 to the device 100, the sub-pages being adapted for the device's (100) limited memory (120) and browser (150) resources. A rendering step 640 is rendering (640) the pagination navigation bar on the device 100 screen, thereby enabling the end-user to select a certain page number. Upon selection of a page, a sending step 650 is sending a request comprising a page number for a corresponding sub-page to the web gateway (500).

Upon receiving the requested unfolded element from the web gateway 500 in a receiving step 660, the browser 150 of the device 100 is rendering the page in a rendering step 670. The device is using the comprised bookmark to scroll to the correct location.

A resource constrained device 100 will now be described in relation to figure 2a.

The device 100 comprises a processing unit 110, a memory 120 and a user interface 130 which comprises a screen. Processing unit 110, memory 120 and user interface 130 are constrained resources, which limit user experience, speed and other performance parameters. Further the device 100 comprises a radio transceiver 140 enabling connectivity to a radio network 10 and a web gateway 500 which serves as a gateway between the radio network 10 and the Internet 20, and a processing unit 110. In the device 100 is implemented a browsing function 150. The device 100 is configured and adapted to perform all the steps of the method 600 as described above. It is thus configured and adapted to:
send a HTTP request for a web page '40' to a remote web server 30 via a web gateway 500;
receive from the web gateway 500 a web page 40 in a folded format optimized for rendering on a limited screen with limited memory;
scroll the content so that the location of a bookmark is visible on the screen;
send an unfolding request to the web gateway 500 comprising a URL and a folding ID indicating an element that should be unfolded;
receive from the web gateway 500 the unfolded web page 40 comprising the unfolded element;
receive a pagination navigation bar comprising page numbers allocated to sub-pages of the unfolded web page 40 to the device 100, the sub-pages being adapted to the device memory 120 size; and
send a request comprising a page number for a corresponding sub-page to the web gateway 500.

A web gateway 500 according to an embodiment of the present invention will now be described in relation to figure 2b. Figure 2b displays a web gateway 500 comprising a first interface 510 towards a radio network 10 and a second interface 520 towards the Internet 20. The gateway 500 further comprises a processor 530 and a memory 540. Upon reception of a web page '40', the processor is adapted to transform it to a web page 40 with reduced support for layout attributes. The corresponding markup language document 40 may we written in XHTML-MP. The processor 530 and memory 540 are further adapted and configured to provide a serializing function 550 so that the web page 40 may be interchangeably manipulated as a markup language document 40 and its isomorphic DOM tree 40. A person skilled in the art will appreciate that editing of elements in the web page 40 may be achieved by manipulation of document representation 40 or by equivalent manipulation of the DOM tree representation 40 with the same result. The processor 530 and memory 540, which also comprises a disk-based cache store 540', further enable a folding function 570 and a folding cache function 560, with which the comprised elements of the web page 40 is manipulated either as elements of the document representation 40 or as isomorphic elements of the DOM representation 40. The web gateway 500 is adapted and configured to perform folding and unfolding according to the first and second aspect of the invention. The web gateway 500 is adapted an configured to
receive an HTTP request for a web page '40' from the device 100 and obtain a web page 40 from a remote web server 30;
identify the lowest-level folding candidate element of every web page 40 branch;
attribute structure attributes to each folding candidate element derived from its children elements, indicative of the amount of content;
replace each group of consecutive folding candidate element siblings with a replacing folding candidate element that comprises structure attributes;
assess the structure attributes of each remaining folding candidate element against predetermined criteria for folding elements, and if the criteria are met;
mark that element with a unique folding element ID enabling retrieval of the folding element, and a bookmark;
finish the marked web page 40 by replacing each folding element with a new DIV node comprising a hyperlink generated based on at least the folding element's ID, and URL; and
customize the web page 40 for the device 100 by chunking it into sub-pages of equal data size, adapted for the device 100 memory and processing capabilities,
allocate a page number to each sub-page,
send a pagination navigation bar comprising the allocated page numbers of the web page to the device 100,
receive a page number from the device 100
send the customized web page 40 to the device 100

The web gateway 500 is further adapted to receive an HTTP request from the device 100 and search for an unfolding indicator in the request URL, and if found:
extract a folding ID and a page URL from the request URL;
remove the marking of the folding element to which the page URL points;
finish the unfolded web page 40 by replacing each folding element with a new DIV node comprising a hyperlink generated based on at least the folding element's ID, and URL; and send the unfolded web page 40 to the device 100.

The combined aspects of the invention give many advantages. Firstly they give a better user experience - the amount of necessary scrolling is reduced. This in turn gives two advantages; the content can be consumed with less user interaction, i.e. it becomes more handy, which is an important aspect not least for user groups with impaired motor activity in their hands, such as elderly or rheumatics. Further, the combined aspects of the invention provide a better overview of the content; firstly because it is all visible on the screen, second of all because the significant information is no longer overshadowed by distracting surplus information. The navigation and orientation in the page is simplified.

The clickable placeholder contains considerably less data than the navigation area which it replaces, and this leads to an accelerated downloading. This is essential for devices that are downloading content over a radio link.

The invention also enables a more efficient use of the device memory and browser capabilities. Pagination customizes sub-pages to fit the device 100. This prevents loss of content, prevents the device from producing error messages informing the end user that the page is too large and it secures rendering of the entire page. The pagination is integrated with the folding and unfolding methods to solve the problem with total size of web pages changing as elements comprised within the pages are folded or unfolded.

The methods according to embodiments of the invention enable distinguishing the navigation areas from normal content in a highly reliable way, thereby significantly reducing the error rate of content folding processing.

The claimed invention is a gateway-based solution and no extra installation of software has to be made on the device. This is an advantage as the device memory and processor capabilities are limited. As for the rest it is also a browser independent implementation.

Embodiments of the invention thus accomplishes the objective to provide methods, gateway and device for folding of content in an original vertically oriented web page, so that it is suitable for rendering in a resource-constrained computing device. The related objective is to reduce the amount of data the device has to send, receive, process, store and render, is achieved through among other things a browser-independent solution, where no extra software installation is necessary on the device. The clickable placeholder comprises considerably less data than the structures it replaces

The objective to preserve the information inherent in the content, while defusing features that may become a liability is achieved through the advanced structure and content analysis upon which aspects of the invention build. Careful experimenting has proven above objectives can be achieved without offsetting the user experience by procedures that cannot accurately distinguish inherent information from void features. Methods according to the invention performs a highly accurate analysis with very low error rate. The objective to retain certain dynamics of the original web page to allow the content to remain dynamic in nature is achieved through the clickable placeholder.

## Claims

1. A method (300) for content folding of a web page (40) to enable rendering of the web page (40) on a resource-constrained device (100), wherein the web page (40) is represented by a markup language document (40) or by an isomorphic Document Object Model, DOM, tree of the markup language document (40), the method comprising the following steps being performed in a web gateway (500):
receiving (310) an HTTP request for the web page (40) from the resource-constrained device (100);
obtaining (320) the web page (40) from a remote web server (30);
identifying (330) a folding candidate element of every branch of the isomorphic DOM tree of the web page (40), wherein the folding candidate element is an element which is searched from a root node of the isomorphic DOM tree till each element of the isomorphic DOM tree, such that none of the folding candidate element's children is a folding element, wherein a determination (332) that none of the folding candidate element's children is a folding element is recursively based on:
determining (334) a type-set of the folding candidate element, wherein the type-set is selected from at least one of DIV, UL, and OL element types;
determining (336) whether an average hyperlink text length of the folding candidate element's children is below a first predefined value; and
determining (338) whether an average text length of the folding candidate element's children is below a second predefined value;
attributing (340) structure attributes to each folding candidate element, wherein the structure attributes are derived from each of the folding candidate element's children elements, and are indicative of a structure of the folding candidate element, wherein the structure attributes are further indicative of at least one of total hyperlink length, hyperlink count, total text length, text count, and LI count found in the children elements;
replacing (350) at least one group of folding candidate elements that are consecutive siblings of each other, with a replacing folding candidate element that comprises the attributed structure attributes;
assessing (360) the attributed structure attributes of each of the folding candidate element not being replaced with the replacing folding candidate element, against predetermined criteria for folding elements, wherein the predetermined criteria correspond to one or more of the total hyperlink length, the hyperlink count, the total text length, the text count, the average hyperlink text length, the average text length, and the LI count,
and if the predetermined criteria are met:
marking (370) each of the folding candidate element for which the predetermined criteria are met, with a unique folding ID, wherein the marking (370) enables retrieval of the folding element, and wherein the marking (370) further comprises adding a bookmark for locating a particular position in the web-page (40) and for easier rendering of a relevant section of the web page (40);
finishing (380) the marked web page (40) by replacing each of the folding candidate element with a new DIV node comprising a hyperlink generated based on at least the folding candidate element's ID, the bookmark, and a page URL associated with the HTTP request, thus creating a clickable placeholder,
wherein the finishing (380) the marked web page (40) further comprises:
customizing (382) the web page (40) for the resource-constrained device (100) by chunking the web page (40) into sub-pages of equal data size adapted for the resource-constrained device's (100) limited memory (120) and browser (150) resources;
allocating (384) a page number to each sub-page of the sub-pages of equal size;
sending (386) a pagination navigation bar comprising the allocated page numbers of an unfolded web page (40), to the resource-constrained device (100);
receiving (388) a page number selected from the allocated page numbers, from the resource-constrained device (100); and
preparing (389) to send a sub-page corresponding to the received page number as a customized web page (40); and
sending (390) the customized web page (40) to the resource-constrained device (100),
wherein the clickable placeholder enables unfolding of a folded web page (40) when, at the resource-constrained device (100) side, a click operation is performed on the clickable placeholder.

2. The method (300) of claim 1, wherein the replacing step (350) further comprises the steps of:
appending (352) each element of the replaced at least one group of the folding candidate elements as a child to the replacing folding candidate element; and
attributing (340) the structure attributes to the folding candidate element derived from the folding candidate element's children elements.

3. The method (300) of claim 2, wherein the replacing folding candidate element is a DIV node.

4. The method (300) of claim 1, wherein the average hyperlink text length is calculated as word count.

5. The method (300) of claim 1, wherein the average hyperlink text length is calculated as Unicode character count.

6. The method (300) of claim 1, wherein a first criterion of the predetermined criteria is met when the hyperlink count is equal to or above a predetermined value and wherein a second criterion of the predetermined criteria is met when a number of LI elements in the children elements equals zero and the predetermined value is a third predefined value.

7. The method (300) of claim 6, wherein the second criterion of the predetermined criteria is met when the number of LI elements in the children elements exceeds zero and the predetermined value is a fourth predefined value.

8. The method (300) of claim 1, wherein the method further comprises unfolding of the folded content of the web page (40) to enable rendering of the web page (40) on the resource-constrained device (100), and wherein the unfolding, being performed in the web gateway (500), comprising the steps of:
receiving (210) the HTTP request from the resource-constrained device (100), wherein the received HTTP request comprises a request URL;
searching (220) for an unfolding indicator in the request URL; and if found:
extracting (230) the folding ID and the page URL from the request URL, wherein the folding ID and the page URL correspond to an element to be unfolded;
unmarking (240) the folding element to which the page URL points;
finishing (380) the unfolded web page (40) by replacing each of the folding candidate element with a new DIV node comprising the hyperlink generated based on at least the folding candidate element's ID, the bookmark, and the page URL; and
sending (390) the unfolded web page (40) to the resource-constrained device (100),
wherein, in an event, at the resource-constrained device (100) side, a click operation is performed on the hyperlink, the unfolded web page (40) is scrolled to a location where the bookmark is located.

9. The method (300) according to any of claims 1 or 8, wherein the finishing step (380) further comprising appending the bookmark to the page URL for enabling automatic location of the element to be unfolded on the resource-constrained device's (100) screen once the element to be unfolded is unfolded.

10. The method (300) of claim 1, wherein the method further comprises unfolding of the folded content of the web page (40) received from the web gateway (500), and wherein the unfolding, being performed in the resource-constrained device (100), comprising the steps of:
sending (610) the HTTP request to the remote web server (30) via the web gateway (500);
receiving (620) the web page (40) in a folded format optimized for rendering on a limited screen of the resource-constrained device (100);
receiving (630) the pagination navigation bar comprising page numbers allocated to sub-pages of the unfolded web page (40), the sub-pages being adapted for the resource-constrained device's (100) limited memory (120) and the browser (150) resources;
rendering (640) the pagination navigation bar on the resource-constrained device (100) for enabling an end-user to select a page number from page numbers allocated to sub-pages of the unfolded web page (40);
and upon the end-user selecting the page number:
sending (650) a request comprising the selected page number for a corresponding sub-page, to the web gateway (500);
receiving (660) the requested sub-page as an unfolded element; and
rendering (670) the web page (40) and scrolling the content so that a location of the bookmark being appended to the web page (40), is visible on the screen of the resource-constrained device (100),
wherein when the end-user clicks the clickable placeholder, the method further comprises the steps of:
sending (680) an unfolding request to the web gateway (500) comprising the page URL and the folding ID indicating an element associated with the clickable placeholder; and
receiving (690) from the web gateway (500) the unfolded web page (40) comprising the unfolded element.

11. A system for content folding of a web page (40) to enable rendering of the web page (40) on a resource-constrained device (100), the system comprising:
a web gateway (50) comprising a first network interface (510) and a transceiver for providing connectivity towards the resource-constrained device (100) in a radio network (10), a second network interface (520) for providing connectivity towards Internet (20), a memory (540), and a processing unit (530), wherein the web gateway (530) is adapted and configured to:
receive an HTTP request for the web page (40) from the resource-constrained device (100);
obtain the web page (40) from a remote web server (30);
identify a folding candidate element of every branch of an isomorphic Document Object Model, DOM, tree of the web page (40), wherein the folding candidate element is an element which is searched from a root node of the isomorphic DOM tree till each element of the isomorphic DOM tree, such that none of the folding candidate element's children is a folding element, wherein a determination that none of the folding candidate element's children is a folding element is recursively based on:
determining (334) a type-set of the folding candidate element selected, wherein the type-set is selected from at least one of DIV, UL, and OL element types;
determining (336) whether an average hyperlink text length of the folding candidate element's children is below a first predefined value; and
determining (338) whether an average text length of the folding candidate element's children is below a second predefined value;
attribute structure attributes to each folding candidate element, wherein the structure attributes are derived from each of the folding candidate element's children elements, and are indicative of a structure of the folding candidate element, wherein the structure attributes are further indicative of at least one of total hyperlink length, hyperlink count, total text length, text count, and LI count found in the children elements;
replace at least one group of folding candidate elements that are consecutive siblings of each other, with a replacing folding candidate element that comprises the attributed structure attributes;
assess the attributed structure attributes of each of the folding candidate element not being replaced with the replacing folding candidate element, against predetermined criteria for folding elements, wherein the predetermined criteria correspond to one or more of the total hyperlink length, the hyperlink count, the total text length, the text count, the average hyperlink text length, the average text length, and the LI count;
and if the predetermined criteria are met:
mark each of the folding candidate element for which the predetermined criteria are met, with a unique folding ID, wherein the marking enables retrieval of the folding element, and wherein the marking further comprises adding a bookmark for locating a particular position in the web-page (40) and for easier rendering of a relevant section of the web page (40);
finish the marked web page (40) by replacing each of the folding candidate element with a new DIV node comprising a hyperlink generated based on at least the folding candidate element's ID, a page URL associated with the HTTP request, and the bookmark, thus creating a clickable placeholder;
customize the web page (40) for the resource-constrained device (100) by chunking the web page (40) into sub-pages of equal data size adapted for the resource-constrained device's (100) limited memory (120) and browser (150) resources;
allocate a page number to each sub-page of the sub-pages of equal data size;
send a pagination navigation bar comprising the allocated page numbers of an unfolded web page (40), to the resource-constrained device (100);
receive a page number selected from the allocated page numbers, from the resource-constrained device (100); and
send the customized web page (40) to the resource-constrained device (100),
wherein the clickable placeholder enables unfolding of a folded web page (40) when, at the resource-constrained device (100) side, a click operation is performed on the clickable placeholder.

12. The web gateway (500) of claim 11 further adapted to:
receive the HTTP request from the resource-constrained device (100), wherein the received HTTP request comprises a request URL;
search for an unfolding indicator in the request URL; and if found:
extract the folding ID and the page URL from the request URL, wherein the folding ID and the page URL correspond to an element to be unfolded;
remove the marking of the folding element to which the page URL points;
finish the unfolded web page (40) by replacing each of the folding candidate element with a new DIV node comprising the hyperlink generated based on at least the folding candidate element's ID, the page URL, and the bookmark; and
send the unfolded web page (40) to the resource-constrained device (100).

13. The system of claim 11, further comprising the resource-constrained device (100) comprising a memory (120), a radio transceiver (140) enabling connectivity to the web gateway (500) over a radio network (10), a processing unit (110), and a user interface (130) comprising a screen, wherein the resource-constrained device (100) is configured and adapted to:
send the HTTP request to the remote web server (30) via the web gateway (500);
receive a web page (40) in a folded format optimized for rendering on a limited screen of the resource-constrained device (100) with limited memory;
receive the pagination navigation bar comprising page numbers allocated to sub-pages of the unfolded web page (40), the sub-pages being adapted for the resource-constrained device's (100) limited memory (120) and the browser (150) resources;
render the pagination navigation bar on the resource-constrained device (100) for enabling an end-user to select a page number from page numbers allocated to sub-pages of the unfolded web page (40);
and when the end-user selects the page number:
send a request comprising the selected page number for a corresponding sub-page, to the web gateway (500);
receive the requested sub-page as an unfolded element;
scroll the content so that a location of the bookmark being appended to the web page (40), is visible on the screen of the resource-constrained device (100);
send an unfolding request to the web gateway (500) comprising the page URL and the folding ID indicating an element associated with the clickable placeholder, that should be unfolded; and
receive from the web gateway (500) the unfolded web page (40) comprising the unfolded element.

14. A computer program comprising code means for performing the steps of any one of the claims 1-13, when the program is run on a processor of a computer.

15. A computer program product comprising program code means stored on a computer readable medium for performing the method of any of the claims 1-13, when said computer program product is run on a processor of a computer.

## Patentansprüche

1. Verfahren (300) zum Komprimieren von Inhalten einer Webseite (40), um das Wiedergeben der Webseite (40) auf einer Vorrichtung (100) mit beschränkter Ressource zu ermöglichen, wobei die Webseite (40) durch ein Markup Language-Dokument (40) oder einen Verzeichnisbaum eines isomorphen Document Object Model (DOM) des Markup Language-Dokuments (40) dargestellt wird, wobei das Verfahren die folgenden Schritte umfasst, die in einem Web-Gateway (500) durchgeführt werden:
Empfangen (310) einer HTTP-Anforderung für die Webseite (40) von der Vorrichtung (100) mit beschränkter Ressource;
Erlangen (320) der Webseite (40) von einem entfernten Webserver (30);
Identifizieren (330) eines Komprimierkandidatenelements jeder Verzweigung des isomorphen DOM-Verzeichnisbaums der Webseite (40), wobei das Komprimierkandidatenelement ein Element ist, das von einem Wurzelknoten des isomorphen DOM-Verzeichnisbaums bis zu jedem Element des isomorphen DOM-Verzeichnisbaums durchsucht wird, sodass keines der Kinder des Komprimierkandidatenelements ein Komprimierelement ist, wobei eine Bestimmung (332), dass keines der Kinder des Komprimierkandidatenelements ein Komprimierelement ist, rekursiv auf Folgendem basiert:
Bestimmen (334) eines Typensatzes des Komprimierkandidatenelements, wobei der Typensatz aus zumindest einem von einem DIV-, UL- und OL-Elementtyp ausgewählt wird;
Bestimmen (336), ob eine durchschnittliche Hyperlinktextlänge der Kinder des Komprimierkandidatenelements unter einem ersten vordefinierten Wert liegt; und
Bestimmen (338), ob eine durchschnittliche Textlänge der Kinder des Komprimierkandidatenelements unter einem zweiten vordefinierten Wert liegt;
Zuschreiben (340) von Strukturattributen für jedes Komprimierkandidatenelement, wobei die Strukturattribute von jedem der Kinderelemente des Komprimierkandidatenelements abgeleitet werden und auf eine Struktur des Komprimierkandidatenelements hinweisen, wobei die Strukturattribute ferner auf zumindest eine von einer Gesamt-Hyperlinklänge, einer Hyperlinkzahl, einer Gesamt-Textlänge, einer Textzahl und einer LI-Zahl, die in den Kinderelementen gefunden werden, hinweisen;
Ersetzen (350) zumindest einer Gruppe von Komprimierkandidatenelementen, die aufeinander folgende Geschwister sind, durch ein Ersatz-Komprimierkandidatenelement, das die zugeschriebenen Strukturattribute umfasst;
Bewerten (360) der zugeschriebenen Strukturattribute jedes Komprimierkandidatenelements, das nicht durch das Ersatz-Komprimierkandidatenelement ersetzt wurde, hinsichtlich vorbestimmter Kriterien für Komprimierelemente, wobei die vorbestimmten Kriterien einer oder mehreren von der Gesamt-Hyperlinklänge, der Hyperlinkzahl, der Gesamt-Textlänge, der Textzahl, der durchschnittlichen Hyperlinktextlänge, der durchschnittlichen Textlänge und der LI-Zahl entsprechen,
und falls die vorbestimmten Kriterien erfüllt sind:
Markieren (370) jedes Komprimierkandidatenelements, für das die vorbestimmten Kriterien erfüllt sind, mit einer einzigartigen Komprimier-ID, wobei das Markieren (370) das Abrufen des Komprimierelements ermöglicht, und wobei das Markieren (370) ferner Hinzufügen eines Lesezeichens zum Lokalisieren einer konkreten Position in der Webseite (40) und zum einfacheren Wiedergeben eines relevanten Bereichs der Webseite (40) umfasst;
Fertigstellen (380) der markierten Webseite (40) durch Ersetzen jedes Komprimierkandidatenelements durch einen neuen DIV-Knoten, der einen Hyperlink umfasst, der auf Grundlage von zumindest einem von der ID des Komprimierkandidatenelements, dem Lesezeichen und einer mit der HTTP-Anforderung verknüpften Seiten-URL generiert wird, wodurch ein anklickbarer Platzhalter erzeugt wird,
wobei das Fertigstellen (380) der markierten Webseite (40) ferner umfasst:
Individualisieren (382) der Webseite (40) für die Vorrichtung (100) mit beschränkter Ressource durch Teilen der Webseite (40) in Unterseiten mit gleicher Datengröße, die für den begrenzten Speicher (120) der Vorrichtung (100) mit beschränkter Ressource und die Ressourcen des Browsers (150) ausgelegt sind;
Zuweisen (384) einer Seitennummer für jede Unterseite der Unterseiten mit gleicher Größe;
Senden (386) einer Paginierungsnavigationsleiste, die die zugewiesenen Seitennummern einer entkomprimierten Webseite (40) umfasst, an die Vorrichtung (100) mit beschränkter Ressource;
Empfangen (388) einer aus den zugewiesenen Seitennummern ausgewählten Seitennummer von der Vorrichtung (100) mit beschränkter Ressource; und
Vorbereiten (389) zum Senden einer Unterseite, die der empfangenen Seitennummer entspricht, als eine individualisierte Webseite (40); und
Senden (390) der individualisierten Webseite (40) an die Vorrichtung (100) mit beschränkter Ressource,
wobei der anklickbare Platzhalter das Entkomprimieren einer komprimierten Webseite (40) ermöglicht, wenn auf der Seite der Vorrichtung (100) mit beschränkter Ressource ein Anklickvorgang auf den anklickbaren Platzhalter durchgeführt wird.

2. Verfahren (300) nach Anspruch 1, wobei der Schritt des Ersetzens (350) ferner die folgenden Schritte umfasst:
Anhängen (352) jedes Elements der ersetzten zumindest einen Gruppe von Komprimierkandidatenelementen als ein Kind an das Ersatz-Komprimierkandidatenelement; und
Zuschreiben (340) der Strukturattribute für das Komprimierkandidatenelement, die von den Kinderelementen des Komprimierkandidatenelements abgeleitet werden.

3. Verfahren (300) nach Anspruch 2, wobei das Ersatz-Komprimierkandidatenelement ein DIV-Knoten ist.

4. Verfahren (300) nach Anspruch 1, wobei die durchschnittliche Hyperlinktextlänge als Wortzahl berechnet wird.

5. Verfahren (300) nach Anspruch 1, wobei die durchschnittliche Hyperlinktextlänge als Unicode-Zeichenzahl berechnet wird.

6. Verfahren (300) nach Anspruch 1, wobei ein erstes Kriterium der vorbestimmten Kriterien erfüllt ist, wenn die Hyperlinkzahl gleich einem vorbestimmten Wert ist oder darüber liegt, und wobei ein zweites Kriterium der vorbestimmten Kriterien erfüllt ist, wenn eine Anzahl der LI-Elemente in den Kinderelementen gleich null ist und der vorbestimmte Wert ein dritter vordefinierter Wert ist.

7. Verfahren (300) nach Anspruch 6, wobei das zweite Kriterium der vorbestimmten Kriterien erfüllt ist, wenn die Anzahl der LI-Elemente in den Kinderelementen null übersteigt und der vorbestimmte Wert ein vierter vordefinierter Wert ist.

8. Verfahren (300) nach Anspruch 1, wobei das Verfahren ferner Entkomprimieren des komprimierten Inhalts der Webseite (40) umfasst, um das Wiedergeben der Webseite (40) auf der Vorrichtung (100) mit beschränkter Ressource zu ermöglichen, und wobei das Entkomprimieren, das in dem Web-Gateway (500) durchgeführt wird, die folgenden Schritte umfasst:
Empfangen (210) der HTTP-Anforderung von der Vorrichtung (100) mit beschränkter Ressource, wobei die empfangene HTTP-Anforderung eine Anforderungs-URL umfasst;
Suchen (220) nach einem Entkomprimierungsindikator in der Anforderungs-URL; und bei Auffinden:
Extrahieren (230) der Komprimier-ID und der Seiten-URL aus der Anforderungs-URL, wobei die Komprimier-ID und die Seiten-URL einem zu entkomprimierenden Element entsprechen; Entfernen der Markierung (240) des Komprimierelements, auf das die Seiten-URL hindeutet;
Fertigstellen (380) der entkomprimierten Webseite (40) durch Ersetzen jedes Komprimierkandidatenelements durch einen neuen DIV-Knoten, der den Hyperlink umfasst, der auf Grundlage von zumindest der ID des Komprimierkandidatenelements, dem Lesezeichen und der Seiten-URL generiert wird; und
Senden (390) der entkomprimierten Webseite (40) an die Vorrichtung (100) mit beschränkter Ressource,
wobei in einem Fall, dass auf der Seite der Vorrichtung (100) mit beschränkter Ressource ein Anklickvorgang auf den Hyperlink durchgeführt wird, die entkomprimierte Webseite (40) zu einer Stelle gescrollt wird, an der sich das Lesezeichen befindet.

9. Verfahren (300) nach einem der Ansprüche 1 oder 8, wobei der Schritt des Fertigstellens (380) ferner Anhängen des Lesezeichens an die Seiten-URL umfasst, um eine automatische Lokalisierung des zu entkomprimierenden Elements auf dem Bildschirm der Vorrichtung (100) mit beschränkter Ressource zu ermöglichen, sobald das zu entkomprimierende Element entkomprimiert ist.

10. Verfahren (300) nach Anspruch 1, wobei das Verfahren ferner Entkomprimieren des komprimierten Inhalts der Webseite (40), die von dem Web-Gateway (500) empfangen wird, umfasst, und wobei das Entkomprimieren, das in der Vorrichtung (100) mit beschränkter Ressource durchgeführt wird, die folgenden Schritte umfasst:
Senden (610) der HTTP-Anforderung über das Web-Gateway (500) an den entfernten Webserver (30);
Empfangen (620) der Webseite (40) in einem komprimierten Format, optimiert zum Wiedergeben auf einem begrenzten Bildschirm der Vorrichtung (100) mit beschränkter Ressource;
Empfangen (630) der Paginierungsnavigationsleiste, die Seitennummern umfasst, die Unterseiten der entkomprimierten Webseite (40) zugewiesen sind, wobei die Unterseiten für den begrenzten Speicher (120) der Vorrichtung (100) mit beschränkter Ressource und die Ressourcen des Browsers (150) ausgelegt sind;
Wiedergeben (640) der Paginierungsnavigationsleiste auf der Vorrichtung (100) mit beschränkter Ressource, um einem Endnutzer zu ermöglichen, eine Seitennummer aus den Seitennummern, die den Unterseiten der entkomprimierten Webseite (40) zugewiesen sind, auszuwählen;
und bei Auswahl der Seitennummer durch den Endnutzer:
Senden (650) einer Anforderung, die die ausgewählte Seitennummer für eine entsprechende Unterseite umfasst, an das Web-Gateway (500);
Empfangen (660) der angeforderten Unterseite als ein entkomprimiertes Element; und
Wiedergeben (670) der Webseite (40) und Scrollen des Inhalts, sodass eine Stelle eines an die Webseite (40) angehängten Lesezeichens auf dem Bildschirm der Vorrichtung (100) mit beschränkter Ressource sichtbar ist,
wobei das Verfahren, wenn der Endnutzer den anklickbaren Platzhalter anklickt, ferner die folgenden Schritte umfasst:
Senden (680) einer Entkomprimierungsanforderung an das Web-Gateway (500), umfassend die Seiten-URL und die Komprimier-ID, die auf ein dem anklickbaren Platzhalter zugeordnetes Element hinweisen; und
Empfangen (690) der entkomprimierten Webseite (40), die das entkomprimierte Element umfasst, von dem Web-Gateway (500) .

11. System zur Komprimierung von Inhalten einer Webseite (40), um das Wiedergeben der Webseite (40) auf einer Vorrichtung (100) mit beschränkter Ressource zu ermöglichen, wobei das System Folgendes umfasst:
ein Web-Gateway (50), umfassend eine erste Netzschnittstelle (510) und einen Transceiver zum Bereitstellen von Konnektivität zur Vorrichtung (100) mit beschränkter Ressource in einem Funknetz (10), eine zweite Netzschnittstelle (520) zum Bereitstellen von Konnektivität zum Internet (20), einen Speicher (540) und eine Verarbeitungseinheit (530), wobei das Web-Gateway (530) für Folgendes ausgelegt und konfiguriert ist:
Empfangen einer HTTP-Anforderung für die Webseite (40) von der Vorrichtung (100) mit beschränkter Ressource;
Erlangen der Webseite (40) von einem entfernten Webserver (30) ;
Identifizieren eines Komprimierkandidatenelements jeder Verzweigung eines Verzeichnisbaums eines isomorphen Document Object Model (DOM) der Webseite (40), wobei das Komprimierkandidatenelement ein Element ist, das von einem Wurzelknoten des isomorphen DOM-Verzeichnisbaums bis zu jedem Element des isomorphen DOM-Verzeichnisbaums durchsucht wird, sodass keines der Kinder des Komprimierkandidatenelements ein Komprimierelement ist, wobei eine Bestimmung, dass keines der Kinder des Komprimierkandidatenelements ein Komprimierelement ist, rekursiv auf Folgendem basiert:
Bestimmen (334) eines Typensatzes des ausgewählten Komprimierkandidatenelements, wobei der Typensatz aus zumindest einem von einem DIV-, UL- und OL-Elementtyp ausgewählt ist;
Bestimmen (336), ob eine durchschnittliche Hyperlinktextlänge der Kinder des Komprimierkandidatenelements unter einem ersten vordefinierten Wert liegt; und
Bestimmen (338), ob eine durchschnittliche Textlänge der Kinder des Komprimierkandidatenelements unter einem zweiten vordefinierten Wert liegt;
Zuschreiben von Strukturattributen für jedes Komprimierkandidatenelement, wobei die Strukturattribute von jedem der Kinderelemente des Komprimierkandidatenelements abgeleitet werden und auf eine Struktur des Komprimierkandidatenelements hinweisen, wobei die Strukturattribute ferner auf zumindest eine von einer Gesamt-Hyperlinklänge, einer Hyperlinkzahl, einer Gesamt-Textlänge,
einer Textzahl und einer LI-Zahl, die in den Kinderelementen gefunden werden, hinweisen;
Ersetzen zumindest einer Gruppe von Komprimierkandidatenelementen, die aufeinander folgende Geschwister sind, durch ein Ersatz-Komprimierkandidatenelement, das die zugeschriebenen Strukturattribute umfasst;
Bewerten der zugeschriebenen Strukturattribute jedes Komprimierkandidatenelements, das nicht durch das Ersatz-Komprimierkandidatenelement ersetzt wurde, hinsichtlich vorbestimmter Kriterien für Komprimierelemente, wobei die vorbestimmten Kriterien einer oder mehreren von der Gesamt-Hyperlinklänge, der Hyperlinkzahl, der Gesamt-Textlänge, der Textzahl, der durchschnittlichen Hyperlinktextlänge, der durchschnittlichen Textlänge und der LI-Zahl entsprechen,
und falls die vorbestimmten Kriterien erfüllt sind:
Markieren jedes Komprimierkandidatenelements, für das die vorbestimmten Kriterien erfüllt sind, mit einer einzigartigen Komprimier-ID, wobei das Markieren das Abrufen des Komprimierelements ermöglicht, und wobei das Markieren ferner Hinzufügen eines Lesezeichens zum Lokalisieren einer konkreten Position in der Webseite (40) und zum einfacheren Wiedergeben eines relevanten Bereichs der Webseite (40) umfasst;
Fertigstellen der markierten Webseite (40) durch Ersetzen jedes Komprimierkandidatenelements durch einen neuen DIV-Knoten, der einen Hyperlink umfasst, der auf Grundlage von zumindest einem von der ID des Komprimierkandidatenelements, einer mit der HTTP-Anforderung verknüpften Seiten-URL und dem Lesezeichen generiert wird, wodurch ein anklickbarer Platzhalter erzeugt wird,
Individualisieren der Webseite (40) für die Vorrichtung (100) mit beschränkter Ressource durch Teilen der Webseite (40) in Unterseiten mit gleicher Datengröße, die für den begrenzten Speicher (120) der Vorrichtung (100) mit beschränkter Ressource und die Ressourcen des Browsers (150) ausgelegt sind;
Zuweisen einer Seitennummer für jede Unterseite der Unterseiten mit gleicher Größe;
Senden einer Paginierungsnavigationsleiste, die die zugewiesenen Seitennummern einer entkomprimierten Webseite (40) umfasst, an die Vorrichtung (100) mit beschränkter Ressource;
Empfangen einer aus den zugewiesenen Seitennummern ausgewählten Seitennummer von der Vorrichtung (100) mit beschränkter Ressource; und
Senden der individualisierten Webseite (40) an die Vorrichtung (100) mit beschränkter Ressource,
wobei der anklickbare Platzhalter das Entkomprimieren einer komprimierten Webseite (40) ermöglicht, wenn auf der Seite der Vorrichtung (100) mit beschränkter Ressource ein Anklickvorgang auf den anklickbaren Platzhalter durchgeführt wird.

12. Web-Gateway (500) nach Anspruch 11, das ferner für Folgendes ausgelegt ist:
Empfangen der HTTP-Anforderung von der Vorrichtung (100) mit beschränkter Ressource, wobei die empfangene HTTP-Anforderung eine Anforderungs-URL umfasst;
Suchen nach einem Entkomprimierungsindikator in der Anforderungs-URL; und bei Auffinden:
Extrahieren der Komprimier-ID und der Seiten-URL aus der Anforderungs-URL, wobei die Komprimier-ID und die Seiten-URL einem zu entkomprimierenden Element entsprechen;
Entfernen der Markierung des Komprimierelements, auf das die Seiten-URL hindeutet;
Fertigstellen der entkomprimierten Webseite (40) durch Ersetzen jedes Komprimierkandidatenelements durch einen neuen DIV-Knoten, der den Hyperlink umfasst, der auf Grundlage von zumindest der ID des Komprimierkandidatenelements, der Seiten-URL und dem Lesezeichen generiert wird; und
Senden der entkomprimierten Webseite (40) an die Vorrichtung (100) mit beschränkter Ressource.

13. System nach Anspruch 11, ferner umfassend die Vorrichtung (100) mit beschränkter Ressource, die einen Speicher (120), einen Funktransceiver (140), der eine Konnektivität zum Web-Gateway (500) über ein Funknetz (10) ermöglicht, eine Verarbeitungseinheit (110) und eine Benutzeroberfläche (130), die einen Bildschirm umfasst, umfasst, wobei die Vorrichtung (100) mit beschränkter Ressource für Folgendes konfiguriert und ausgelegt ist:
Senden der HTTP-Anforderung über das Web-Gateway (500) an den entfernten Webserver (30);
Empfangen der Webseite (40) in einem komprimierten Format, optimiert zum Wiedergeben auf einem begrenzten Bildschirm der Vorrichtung (100) mit begrenztem Speicher;
Empfangen der Paginierungsnavigationsleiste, die Seitennummern umfasst, die Unterseiten der entkomprimierten Webseite (40) zugewiesen sind, wobei die Unterseiten für den begrenzten Speicher (120) der Vorrichtung (100) mit beschränkter Ressource und die Ressourcen des Browsers (150) ausgelegt sind;
Wiedergeben der Paginierungsnavigationsleiste auf der Vorrichtung (100) mit beschränkter Ressource, um einem Endnutzer zu ermöglichen, eine Seitennummer aus den Seitennummern, die den Unterseiten der entkomprimierten Webseite (40) zugewiesen sind, auszuwählen;
und bei Auswahl der Seitennummer durch den Endnutzer:
Senden einer Anforderung, die die ausgewählte Seitennummer für eine entsprechende Unterseite umfasst, an das Web-Gateway (500) ;
Empfangen der angeforderten Unterseite als ein entkomprimiertes Element;
Scrollen des Inhalts, sodass eine Stelle des an die Webseite (40) angehängten Lesezeichens auf dem Bildschirm der Vorrichtung (100) mit beschränkter Ressource sichtbar ist;
Senden einer Entkomprimierungsanforderung an das Web-Gateway (500), umfassend die Seiten-URL und die Komprimier-ID, die auf ein dem anklickbaren Platzhalter zugeordnetes Element, das entkomprimiert werden soll, hinweisen; und
Empfangen der entkomprimierten Webseite (40), die das entkomprimierte Element umfasst, von dem Web-Gateway (500).

14. Computerprogramm, umfassend Codemittel zum Durchführen der Schritte nach einem der Ansprüche 1-13, wenn das Programm auf einem Prozessor eines Computers läuft.

15. Computerprogrammprodukt, umfassend Programmcodemittel, die auf einem computerlesbaren Medium gespeichert sind, zum Durchführen des Verfahrens nach einem der Ansprüche 1-13, wenn das Computerprogrammprodukt auf einen Prozessor eines Computers läuft.

## Revendications

1. Procédé (300) de pliage de contenu d'une page Web (40) pour permettre le rendu d'une page Web (40) sur un dispositif à ressources limitées (100), dans lequel la page Web (40) est représentée par un document en langage de balisage (40) ou par un arbre de modèle d'objet de document, DOM, isomorphe du document en langage de balisage (40), le procédé comprenant les étapes suivantes effectuées dans une passerelle Web (500) :
la réception (310) d'une requête HTTP pour la page Web (40) à partir du dispositif à ressources limitées (100) ;
l'obtention (320) de la page Web (40) à partir d'un serveur Web distant (30) ;
l'identification (330) d'un élément candidat de pliage de chaque branche de l'arbre DOM isomorphe de la page Web (40),
dans lequel l'élément candidat de pliage est un élément recherché à partir d'un noeud racine de l'arbre DOM isomorphe jusqu'à chaque élément de l'arbre DOM isomorphe, de sorte qu'aucun des enfants de l'élément candidat de pliage n'est un élément de pliage, dans lequel une détermination (332) qu'aucun des enfants de l'élément candidat de pliage n'est un élément de pliage est basée de manière récursive sur :
la détermination (334) d'un ensemble de types de l'élément candidat de pliage, dans lequel l'ensemble de types est sélectionné parmi au moins l'un des types d'éléments DIV, UL et OL ;
le fait de déterminer (336) si une longueur de texte de lien hypertexte moyenne des enfants de l'élément candidat de pliage est en dessous d'une première valeur prédéfinie ; et
le fait de déterminer (338) si une longueur de texte moyenne des enfants de l'élément candidat de pliage est en dessous d'une deuxième valeur prédéfinie ;
l'attribution (340) d'attributs de structure à chaque élément candidat de pliage, dans lequel les attributs de structure sont dérivés de chacun des éléments enfants de l'élément candidat de pliage, et indiquent une structure de l'élément candidat de pliage, dans lequel les attributs de structure indiquent en outre au moins l'un des éléments parmi la longueur de lien hypertexte totale, le nombre de liens hypertexte, la longueur de texte totale, le nombre de textes et le nombre de LI trouvés dans les éléments enfants ;
le remplacement (350) d'au moins un groupe d'éléments candidats de pliage qui sont des frères et soeurs consécutifs l'un de l'autre, par un élément candidat de pliage de remplacement qui comprend les attributs de structure attribués ;
l'évaluation (360) des attributs de structure attribués de chacun des éléments candidats de pliage qui ne sont pas remplacés par l'élément candidat de pliage de remplacement, en fonction de critères prédéterminés pour les éléments de pliage, dans lequel les critères prédéterminés correspondent à un ou plusieurs éléments parmi la longueur de lien hypertexte totale, le nombre de liens hypertexte, la longueur de texte totale, le nombre de textes, la longueur de texte de lien hypertexte moyenne, la longueur de texte moyenne et le nombre de LI,
et si les critères prédéterminés sont remplis :
le marquage (370) de chacun des éléments candidats de pliage pour lesquels les critères prédéterminés sont remplis, avec un ID de pliage unique, dans lequel le marquage (370) permet la récupération de l'élément de pliage, et dans lequel le marquage (370) comprend en outre l'ajout d'un signet pour localiser une position particulière dans la page Web (40) et pour faciliter le rendu d'une section pertinente de la page Web (40) ;
la finition (380) de la page Web marquée (40) en remplaçant chacun des éléments candidats de pliage par un nouveau noeud DIV comprenant un lien hypertexte généré sur la base d'au moins l'ID de l'élément candidat de pliage, le signet et l'URL d'une page associée à la requête HTTP, créant ainsi un espace réservé cliquable,
dans lequel la finition (380) de la page Web marquée (40) comprend en outre :
la personnalisation (382) de la page Web (40) pour le dispositif à ressources limitées (100) en fragmentant la page Web (40) en sous-pages de taille de données égale adaptées à la mémoire limitée (120) et aux ressources de navigateur (150) du dispositif à ressources limitées (100) ;
l'attribution (384) d'un numéro de page à chaque sous-page des sous-pages de taille égale ;
l'envoi (386) d'une barre de navigation de pagination comprenant les numéros de page attribués d'une page Web dépliée (40) au dispositif à ressources limitées (100) ;
la réception (388) d'un numéro de page sélectionné parmi les numéros de page attribués, à partir du dispositif à ressources limitées (100) ; et
la préparation (389) pour envoyer une sous-page correspondant au numéro de page reçu en tant que page Web personnalisée (40) ; et
l'envoi (390) de la page Web personnalisée (40) au dispositif à ressources limitées (100), dans lequel l'espace réservé cliquable permet de déplier une page Web pliée (40) lorsque, du côté du dispositif à ressources limitées (100), une opération de clic est effectuée sur l'espace réservé cliquable.

2. Procédé (300) selon la revendication 1, dans lequel l'étape de remplacement (350) comprend en outre les étapes :
d'ajout (352) de chaque élément de l'au moins un groupe remplacé des éléments candidats de pliage en tant qu'enfant à l'élément candidat de pliage de remplacement ; et
d'attribution (340) des attributs de structure à l'élément candidat de pliage dérivé des éléments enfants de l'élément candidat de pliage.

3. Procédé (300) selon la revendication 2, dans lequel l'élément candidat de pliage de remplacement est un noeud DIV.

4. Procédé (300) selon la revendication 1, dans lequel la longueur de texte de lien hypertexte moyenne est calculée en tant que nombre de mots.

5. Procédé (300) selon la revendication 1, dans lequel la longueur de texte de lien hypertexte moyenne est calculée en tant que nombre de caractères Unicode.

6. Procédé (300) selon la revendication 1, dans lequel un premier critère des critères prédéterminés est rempli lorsque le nombre de liens hypertexte est égal ou supérieur à une valeur prédéterminée et dans lequel un second critère des critères prédéterminés est rempli lorsqu'un nombre d'éléments LI dans les éléments enfants est égal à zéro et que la valeur prédéterminée est une troisième valeur prédéfinie.

7. Procédé (300) selon la revendication 6, dans lequel le second critère des critères prédéterminés est rempli lorsque le nombre d'éléments LI dans les éléments enfants dépasse zéro et que la valeur prédéterminée est une quatrième valeur prédéfinie.

8. Procédé (300) selon la revendication 1, dans lequel le procédé comprend en outre le dépliage du contenu plié de la page Web (40) pour permettre le rendu de la page Web (40) sur le dispositif à ressources limitées (100), et dans lequel le dépliage, effectué dans la passerelle Web (500), comprend les étapes :
de réception (210) de la requête HTTP du dispositif à ressources limitées (100), dans lequel la requête HTTP reçue comprend une URL de requête ;
de recherche (220) d'un indicateur de dépliage dans l'URL de requête ; et s'il est trouvé :
d'extraction (230) de l'ID de pliage et de l'URL de la page de l'URL de requête, dans lequel l'ID de pliage et l'URL de la page correspondent à un élément à déplier ;
de démarquage (240) de l'élément de pliage sur lequel pointe l'URL de la page ;
de finition (380) de la page Web dépliée (40) en remplaçant chacun des éléments candidats de pliage par un nouveau noeud DIV comprenant le lien hypertexte généré sur la base d'au moins l'ID de l'élément candidat de pliage, le signet et l'URL de la page ; et
d'envoi (390) de la page Web dépliée (40) au dispositif à ressources limitées (100),
dans lequel, dans le cas où, du côté du dispositif à ressources limitées (100), une opération de clic est effectuée sur le lien hypertexte, la page Web dépliée (40) est amenée à défiler jusqu'à un emplacement du signet.

9. Procédé (300) selon l'une quelconque des revendications 1 ou 8, dans lequel l'étape de finition (380) comprend en outre l'ajout du signet à l'URL de la page pour permettre la localisation automatique de l'élément à déplier sur l'écran du dispositif à ressources limitées (100) une fois que l'élément à déplier est déplié.

10. Procédé (300) selon la revendication 1, dans lequel le procédé comprend en outre le dépliage du contenu plié de la page Web (40) reçue de la passerelle Web (500), et dans lequel le dépliage, étant effectué dans le dispositif à ressources limitées (100), comprend les étapes :
d'envoi (610) de la requête HTTP au serveur Web distant (30) par l'intermédiaire de la passerelle Web (500) ;
de réception (620) de la page Web (40) dans un format plié optimisé pour le rendu sur un écran limité du dispositif à ressources limitées (100) ;
de réception (630) de la barre de navigation de pagination comprenant des numéros de page attribués à des sous-pages de la page Web dépliée (40), les sous-pages étant adaptées à la mémoire limitée (120) et aux ressources de navigateur (150) du dispositif à ressources limitées (100) ;
de rendu (640) de la barre de navigation de pagination sur le dispositif à ressources limitées (100) pour permettre à un utilisateur final de sélectionner un numéro de page parmi les numéros de page attribués à des sous-pages de la page Web dépliée (40) ;
et lorsque l'utilisateur final sélectionne le numéro de page :
d'envoi (650) d'une requête comprenant le numéro de page sélectionné pour une sous-page correspondante, à la passerelle Web (500) ;
de réception (660) de la sous-page demandée en tant qu'élément déplié ; et
de rendu (670) de la page Web (40) et de défilement du contenu de sorte qu'un emplacement du signet ajouté à la page Web (40) est visible sur l'écran du dispositif à ressources limitées (100),
dans lequel, lorsque l'utilisateur final clique sur l'espace réservé cliquable, le procédé comprend en outre les étapes :
d'envoi (680) d'une requête de dépliage à la passerelle Web (500) comprenant l'URL de la page et l'ID de pliage indiquant un élément associé à l'espace réservé cliquable ; et
de réception (690) à partir de la passerelle Web (500) de la page Web dépliée (40) comprenant l'élément déplié.

11. Système de pliage de contenu d'une page Web (40) pour permettre le rendu de la page Web (40) sur un dispositif à ressources limitées (100), le système comprenant :
une passerelle Web (50) comprenant une première interface réseau (510) et un émetteur-récepteur pour fournir une connectivité vers le dispositif à ressources limitées (100) dans un réseau radio (10), une seconde interface réseau (520) pour fournir une connectivité vers Internet (20), une mémoire (540) et une unité de traitement (530), dans lequel la passerelle Web (530) est adaptée et configurée pour :
recevoir une requête HTTP pour la page Web (40) à partir du dispositif à ressources limitées (100) ;
obtenir la page Web (40) à partir d'un serveur Web distant (30) ;
identifier un élément candidat de pliage de chaque branche d'un arbre de modèle d'objet de document, DOM, isomorphe de la page Web (40), dans lequel l'élément candidat de pliage est un élément recherché à partir d'un noeud racine de l'arbre DOM isomorphe jusqu'à chaque élément de l'arbre DOM isomorphe, de sorte qu'aucun des enfants de l'élément candidat de pliage n'est un élément de pliage, dans lequel une détermination qu'aucun des enfants de l'élément candidat de pliage n'est un élément de pliage est basée de manière récursive sur :
la détermination (334) d'un ensemble de types de l'élément candidat de pliage sélectionné, dans lequel l'ensemble de types est sélectionné parmi au moins l'un des types d'éléments DIV, UL et OL ;
le fait de déterminer (336) si une longueur de texte de lien hypertexte moyenne des enfants de l'élément candidat de pliage est en dessous d'une première valeur prédéfinie ; et
le fait de déterminer (338) si une longueur de texte moyenne des enfants de l'élément candidat de pliage est en dessous d'une deuxième valeur prédéfinie ;
attribuer des attributs de structure à chaque élément candidat de pliage, dans lequel les attributs de structure sont dérivés de chacun des éléments enfants de l'élément candidat de pliage, et indiquent une structure de l'élément candidat de pliage, dans lequel les attributs de structure indiquent en outre au moins l'un des éléments parmi la longueur de lien hypertexte totale, le nombre de liens hypertexte, la longueur de texte totale, le nombre de textes et le nombre de LI trouvés dans les éléments enfants ;
remplacer au moins un groupe d'éléments candidats de pliage qui sont des frères et soeurs consécutifs l'un de l'autre, par un élément candidat de pliage de remplacement qui comprend les attributs de structure attribués ;
évaluer les attributs de structure attribués de chacun des éléments candidats de pliage qui ne sont pas remplacés par l'élément candidat de pliage de remplacement, en fonction de critères prédéterminés pour les éléments de pliage, dans lequel les critères prédéterminés correspondent à un ou
plusieurs éléments parmi la longueur de lien hypertexte totale, le nombre de liens hypertexte, la longueur de texte totale, le nombre de textes, la longueur de texte de lien hypertexte moyenne, la longueur de texte moyenne et le nombre de LI ;
et si les critères prédéterminés sont remplis :
marquer chacun des éléments candidats de pliage pour lesquels les critères prédéterminés sont remplis, avec un ID de pliage unique, dans lequel le marquage permet la récupération de l'élément de pliage, et dans lequel le marquage comprend en outre l'ajout d'un signet pour localiser une position particulière dans la page Web (40) et pour faciliter le rendu d'une section pertinente de la page Web (40) ;
terminer la page Web marquée (40) en remplaçant chacun des éléments candidats de pliage par un nouveau noeud DIV comprenant un lien hypertexte généré sur la base d'au moins l'ID de l'élément candidat de pliage, l'URL d'une page associée à la requête HTTP et le signet, créant ainsi un espace réservé cliquable ;
personnaliser la page Web (40) pour le dispositif à ressources limitées (100) en fragmentant la page Web (40) en sous-pages de taille de données égale adaptées à la mémoire limitée (120) et aux ressources de navigateur (150) du dispositif à ressources limitées (100) ;
attribuer un numéro de page à chaque sous-page des sous-pages de taille de données égale ;
envoyer une barre de navigation de pagination comprenant les numéros de page attribués d'une page Web dépliée (40) au dispositif à ressources limitées (100) ;
recevoir un numéro de page sélectionné parmi les numéros de page attribués, à partir du dispositif à ressources limitées (100) ; et
envoyer la page Web personnalisée (40) au dispositif à ressources limitées (100),
dans lequel l'espace réservé cliquable permet de déplier une page Web pliée (40) lorsque, du côté du dispositif à ressources limitées (100), une opération de clic est effectuée sur l'espace réservé cliquable.

12. Passerelle Web (500) selon la revendication 11, conçue en outre pour :
recevoir la requête HTTP du dispositif à ressources limitées (100), dans lequel la requête HTTP reçue comprend une URL de requête ;
rechercher un indicateur de dépliage dans l'URL de requête ; et s'il est trouvé :
extraire l'ID de pliage et l'URL de la page de l'URL de requête, dans lequel l'ID de pliage et l'URL de la page correspondent à un élément à déplier ;
supprimer le marquage de l'élément de pliage sur lequel pointe l'URL de la page ;
terminer la page Web dépliée (40) en remplaçant chacun des éléments candidats de pliage par un nouveau noeud DIV comprenant le lien hypertexte généré sur la base d'au moins l'ID de l'élément candidat de pliage, l'URL de la page et le signet ; et
envoyer la page Web dépliée (40) au dispositif à ressources limitées (100).

13. Système selon la revendication 11, comprenant en outre le dispositif à ressources limitées (100) comprenant une mémoire (120), un émetteur-récepteur radio (140) permettant une connectivité à la passerelle Web (500) sur un réseau radio (10), une unité de traitement (110) et une interface utilisateur (130) comprenant un écran, dans lequel le dispositif à ressources limitées (100) est configuré et conçu pour :
envoyer la requête HTTP au serveur Web distant (30) par l'intermédiaire de la passerelle Web (500) ;
recevoir une page Web (40) dans un format plié optimisé pour le rendu sur un écran limité du dispositif à ressources limitées (100) avec une mémoire limitée ;
recevoir la barre de navigation de pagination comprenant les numéros de page attribués à des sous-pages de la page Web dépliée (40), les sous-pages étant adaptées à la mémoire limitée (120) et aux ressources de navigateur (150) du dispositif à ressources limitées (100) ;
rendre la barre de navigation de pagination sur le dispositif à ressources limitées (100) pour permettre à un utilisateur final de sélectionner un numéro de page parmi les numéros de page attribués à des sous-pages de la page Web dépliée (40) ;
et lorsque l'utilisateur final sélectionne le numéro de page :
envoyer une requête comprenant le numéro de page sélectionné pour une sous-page correspondante, à la passerelle Web (500) ;
recevoir la sous-page demandée en tant qu'élément déplié ;
faire défiler le contenu de sorte qu'un emplacement du signet ajouté à la page Web (40) est visible sur l'écran du dispositif à ressources limitées (100) ;
envoyer une requête de dépliage à la passerelle Web (500) comprenant l'URL de la page et l'ID de pliage indiquant un élément associé à l'espace réservé cliquable, qui doit être déplié ; et
recevoir à partir de la passerelle Web (500) la page Web dépliée (40) comprenant l'élément déplié.

14. Programme informatique comprenant un moyen de code pour mettre en oeuvre les étapes selon l'une quelconque des revendications 1 à 13, lorsque le programme est exécuté sur un processeur d'un ordinateur.

15. Produit de programme informatique comprenant un moyen de code de programme stocké sur un support lisible par ordinateur pour mettre en oeuvre le procédé selon l'une quelconque des revendications 1 à 13, lorsque ledit produit de programme informatique est exécuté sur un processeur d'un ordinateur.
